# EUROPÄISCHE PATENTSCHRIFT

(11) **EP 0 804 634 B1**
(45) Veröffentlichungstag und Bekanntmachung des Hinweises auf die Patenterteilung: **23.12.1998**
(21) Anmeldenummer: 95942671.9
(22) Anmeldetag: 15.12.1995
(51) Int. Cl.: C23C 28/00

(54) **VERSCHLEISSSCHUTZSCHICHT**
WEARING PROTECTION LAYER
COUCHE DE PROTECTION CONTRE L'USURE

(30) Priorität: 01.02.1995 DE 19503070
(43) Veröffentlichungstag der Anmeldung: 05.11.1997
(73) Patentinhaber: Forschungszentrum Karlsruhe GmbH, 76133 Karlsruhe (DE)
(72) Erfinder: SCHIER, Veit, D-76139 Karlsruhe (DE); HOLLECK, Helmut, D-76139 Karlsruhe (DE)
(74) Vertreter: Rückert, Friedrich, Dr.
(86) Internationale Anmeldenummer: EP9504968
(87) Internationale Veröffentlichungsnummer: WO9623911

(56) Entgegenhaltungen:
- EP-A- 0 179 582
- EP-A- 0 589 641
- WO-A-95/02078
- DE-A- 3 512 986
- DE-A- 4 115 616

## Beschreibung

Die Erfindung betrifft eine Verschleißschutzschicht gemäß dem Oberbegriff des ersten Patentanspruchs.

Eine solche Verschleißschutzschicht ist aus der DE-AS 29 17 348 bekannt. Diese Druckschrift beschreibt einen Verbundkörper, der aus einem Grundkörper sowie aus einer bzw. mehreren, unterschiedlich zusammengesetzten, bindemetallfreien Hartstoffschichten mit einer jeweiligen Dicke von 1 bis 50 µm besteht. Eine der Hartstoffschichten ist aus sehr vielen dünnen Einzelschichten mit einer Dicke von jeweils 0,02 bis 0,1 µm (20 bis 100 nm) aufgebaut ist, wobei sich die Hartstoffzusammensetzung einer jeden Einzelschicht von der Hartstoffzusammensetzung der beiden benachbarten Einzelschichten unterscheidet. Eine bevorzugte Ausführungsform der Verschleißschutzschicht besteht auf einer ersten, auf dem Grundkörper aufliegenden Schicht aus Titancarbid, an die sich alternierend eine Vielzahl von Schichten aus den metallischen Hartstoffen Titancarbid, Titannitrid oder Titancarbonitrid einerseits und den heteropolaren Hartstoffen Aluminiumoxid oder Zirkonoxid andererseits anschließen. Die abschließende, äußere Schicht kann aus Aluminiumoxid mit einem geringen Stickstoffgehalt bestehen.

Eine weitere Verschleißschutzschicht ist aus der DE 35 12 986 Al bekannt. Die einzelnen Lagen aus metallischem Hartstoff können aus Kombinationen der folgenden metallischen Hartstoffe bestehen: TiC/TiN, TiC/TiB₂, TiN/TiB₂, TiB₂/WC, TiB₂/Ti(C,N), TiB₂/(Ti,V)C, TiB₂/(Ti,W)C, (Ti,V)B₂/(Ti,V)C, (Ti,Nb)B₂/(Ti,Nb)C, VB₂/TiN, VB₂/WC, HfB₂/TaC, ZrB₂/TaC oder ZrB₂/NbC. Wesentlich ist die hohe Zahl von Phasengrenzen in der Gesamtschicht. Hieraus ergibt sich eine spannungsfreie, zähe, besser auf dem Substrat haftende und verschleißfeste Schutzschicht. Diese Verschleißschutzschichten eignen sich insbesondere für die Beschichtung von Werkzeugen zur spanabhebenden Metallbearbeitung. Die Verschleißschutzschicht kann mit den Methoden der Kathodenzerstäubung hergestellt werden, wobei mehrere Kathoden aus den verschiedenen metallischen Hartstoffen eingesetzt werden und das Substrat mit Hilfe eines rotierenden Tellers periodisch durch den Abscheidebereich der Kathoden durchgeführt wird.

Aus der EP 0 006 534 A2 ist eine Verschleißschutzschicht bekannt, die aus mindestens fünf, vorzugsweise mehr als zehn Einzellagen besteht, von denen mindestens zwei verschieden zusammengesetzt sind, wobei die erste, auf dem Substrat aufliegende Lage aus einem Carbid, die abschließende äußere Lage aus einem Borid oder einem Carbid und die dazwischenliegenden Lagen aus einem Carbid, Nitrid, Oxid, Borid oder deren Mischungen bestehen. Als Carbide und Nitride kommen insbesondere die entsprechenden Verbindungen der Elemente Hf, Zr, Ta und Titan, somit die metallischen Hartstoffe, in Betracht. Die Boride bestehen vorzugsweise aus den entsprechenden Verbindungen von Hf, Ta, Ti, Zr und N. Als Oxide werden die heteropolaren Hartstoffe Al-, Hf-, Zr-, Be- und Titanoxid vorgeschlagen.

Aus der DE 31 52 742 C2 ist ein Werkzeug für die spanabhebende Bearbeitung mit einem mehrschichtigen Überzug bekannt. Die Schichten des Überzugs bestehen aus einem Nitrid oder Carbid eines Metalls der IV. (Neben-) Gruppe des Periodensystems (Ti, Zr, Hf) und aus einem Nitrid, Karbid, Borid oder Silizid eines Metalls der VI. (Neben-) Gruppe (Cr, Mo, W). Diese Verbindungen sind Elemente der Gruppe der metallischen Hartstoffe. Die Schichten folgen in einer Vielzahl abwechselnd aufeinander, wobei die Schichtdicke der Verbindungen der Metalle der IV. Gruppe 0,05 bis 0,5 µm beträgt und die Schichtdicke der Verbindungen der Metalle der VI. Gruppe 15 bid 40 % der Schichtdicke der Verbindung des Metalls der IV. Gruppe ausmacht. Der Überzug besteht aus bis zu 500 Einzelschichten.

Aufgabe der Erfindung ist, eine weitere, aus einer Vielzahl von alternierenden Einzellagen bestehende Verschleißschutzschicht der eingangs genannten Art vorzuschlagen, bei der die mechanischen, physikalischen und chemischen Eigenschaften metallischer Hartstoffe mit denen anderer Hartstoffe kombiniert werden. Die Verschleißschutzschicht soll gegen keramische und metallische Reibpartner sehr niedrige Reibwerte und eine Härte über 4000 HV0,05 aufweisen.

Die Aufgabe wird erfindungsgemäß durch die im Kennzeichen des ersten Patentanspruchs genannten Merkmale gelöst. Bevorzugte Ausführungsformen der Erfindung sind Gegenstand der weiteren Patentanspüche.

Die Gruppe der metallischen Hartstoffe umfaßt die Boride, Carbide und Nitride der Übergangsmetalle, insbesondere Titannitrid und Titancarbid, sowie deren Mischkristalle. Zu den kovalenten Hartstoffen zählen die Boride, Carbide und Nitride von Aluminium, Silicium und Bor sowie Diamant.

Die Kombination von metallischen und kovalenten Hartstoffen in einer Schicht ermöglicht die Ausnutzung der unterschiedlichen mechanischen, physikalischen und chemischen Eigenschaften dieser Hartstoffe. Durch die periodisch alternierende Anordnung von Einzellagen aus diesen Hartstoffen werden die mechanischen Eigenschaften (Härte, Zähigkeit, Haftung) und das chemische Verhalten (Heißkorrosion, Diffusion, Oxidation) von Viellagenschichten optimiert.

Kovalente Hartstoffe sind an sich als einlagige Schicht auf metallischen Substraten für die Metallbearbeitung entweder ungeeignet oder aber infolge des hohen kovalenten Bindungsanteils nicht als Stoffverbund realisierbar, weil sie schlecht auf den metallischen Substraten haften, spröde sind und hohe Eigenspannungen aufweisen. In der erfindungsgemäßen Anordnung der kovalenten Hartstoff lagen werden diese negativen Eigenschaften jedoch aufgehoben. Die Eigenspannung läßt sich durch eine geringe Dicke der Einzellagen aus dem kovalenten Hartstoff stark vermindern, wodurch sich deren mechanische Stabilität und Haftung deutlich verbessert. Die Dicke der Einzellagen aus dem kovalenten Hartstoff soll höchstens die Hälfte, besser weniger als ein Fünftel der Dicke der Einzellagen aus den metallischen Hartstoffen betragen und vorzugsweise zwischen 1 und 30 nm, besser zwischen 1 und 5 nm liegen. Die Einzellagen aus den metallischen Hartstoffen können bis zu 500 nm dick sein. Trotz ihrer vergleichsweise geringen Dicke bewirken die periodisch angeordneten Einzellagen aus dem kovalenten Hartstoff einen erheblichen Härteanstieg der gesamten Verschleißschutzschicht.

Die erste, auf dem Substrat aufliegende Einzellage der Verschleißschutzschicht besteht aus einem metallischen Hartstoff, vorzugsweise aus TiN oder TiC. Diese Hartstoffe haften besonders gut auf den für Werkzeuge eingesetzten Stählen und Hartmetallen. An die erste Einzellage schließt sich eine Abfolge weiterer Einzellagen von metallischen und kovalenten Hartstoffen an. Alle Einzellagen stellen einen mehrfach wiederholten Verbund aus drei Einzellagen dar, so daß sich an den ersten Verbund ein weiterer Verbund und an diesen mindestens noch ein Verbund aus den drei Einzellagen anschließt. Der Verbund aus den drei Einzelschichten ist zusammengesetzt aus zwei Einzelschichten zweier verschiedener metallischer Hartstoffe wie z. B. TiN und TiC und einer Einzelschicht aus dem kovalenten Hartstoff. Die Anzahl der kovalenten Hartstofflagen sollte mindestens 3 betragen; die Verschleißschutzschicht besteht damit aus mindestens 9 Einzellagen. Für die Einzellagen aus dem kovalenten Hartstoff werden die Verbindungen B₄C, SiC, Si₃N₄, BN, Sialon (Mischkristall (SiAl)₃(N,O)₄, Kohlenstoff, CB_{X}Ny, CN_{X} und deren Mischungen untereinander jeweils mit oder ohne Metallzusätzen verwendet.

Durch den Einbau der Einzellagen aus dem kovalenten Hartstoff wird das Kristallitwachstum und damit die Epitaxie der metallischen Hartstoff lagen unterbrochen, wodurch sich die Zahl der Grenzflächen erhöht. Die kovalenten Hartstoff lagen zeichnen sich durch ihre hohe Härte und chemische Beständigkeit bei Temperaturen um 1000 °C aus. Damit bilden diese Hartstofflagen innerhalb der viellagigen Verschleißschutzschicht eine Diffusionsbarriere und einen effektiven Schutz gegen eine Oxidation der metallischen Hartstoffe.

Als abschließende, oberste Einzellage kann je nach Einsatzgebiet entweder eine Lage aus einem metallischen Hartstoff oder aus einem kovalenten Hartstoff vorgesehen werden. Als oberste Einzellage werden Schichten aus Si₃N₄, Sialon, Kohlenstoff, BN, oder einem metallischen Hartstoff bevorzugt.

Die Zahl der Einzellagen insgesamt liegt vorzugsweise zwischen 10 und 1000. Eine qualitativ hochwertige Verschleißschutzschicht wird ab ca. 150 Einzellagen erzielt. Die Dicke der metallischen Hartstofflagen beträgt vorzugsweise zwischen 30 und 50 nm, während - wie bereits erwähnt - die Dicke der kovalenten Hartstofflagen wesentlich geringer ist und vorzugsweise zwischen 1 und 30nm, besser zwischen 1 und 5 nm liegt. Gute Ergebnisse werden mit 1 nm dicken kovalenten Hartstofflagen erzielt. Die Gesamtdicke der Verschleißschutzschicht kann zwischen 1 und 10 µm betragen.

Die Herstellung der erfindungsgemäßen Verschleißschutzschicht kann in bekannter Weise in der Weise erfolgen, daß bei einem PVD-Verfahren von mehreren Kathoden reaktiv oder nicht reaktiv aus den jeweiligen gewünschten Schichtmaterialien auf das Substrat abgestäubt wird, wobei das Substrat periodisch, etwa auf einem Drehteller, unter den Kathoden durchgeführt wird. Als Substrate eignen sich insbesondere alle Werkzeugstähle, sowie die Hartmetalle (Gruppen: K, P, M).

Die Erfindung wird im folgenden anhand von sechs Figuren näher erläutert.

Es zeigen:
**Fig. 1** vier verschiedene Ausführungsformen (a), (b), (c) und (d) der erfindungsgemäßen Verschleißschutzschicht in schematischer Darstellung;
**Fig. 2** Standzeiten von Verschleißschutzschichten aus TiC und TiN im Vergleich zur Standzeit einer Ausführungsform der erfindungsgemäßen Verschleißschutzschicht;
**Fig. 3** den Reibkoeffizienten einer Ausführungsform der erfindungsgemäßen Verschleißschutzschicht im Vergleich zu bekannten Hartstoffschichten;
**Fig. 4** die Haftung einer Ausführungsform der erfindungsgemäßen Verschleißschutzschicht im Vergleich zu bekannten Hartstoffschichten;
**Fig. 5** die Mikrohärte einer Ausführungsform der erfindungsgemäßen Verschleißschutzschicht im Vergleich zu bekannten Hartstoffschichten;
**Fig. 6** eine TEM-Aufnahme einer Ausführungsform der erfindungsgemäßen Verschleißschutzschicht.

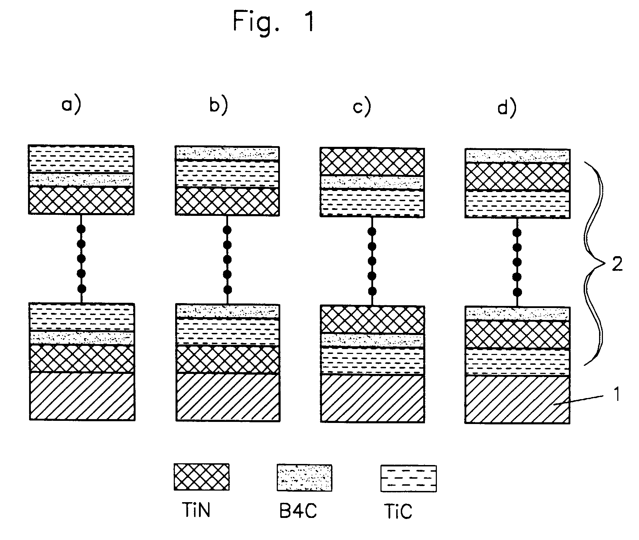

**Fig. 1** zeigt schematisch vier Ausführungsformen der erfindungsgemäßen Verschleißschutzschicht auf einem Substrat 1. Die Darstellung ist in der Weise zu verstehen, daß sich der Verbund 2 aus den drei Einzellagen durch die gesamte Verschleißschutzschicht periodisch wiederholt. In allen Fällen werden jeweils zwei Einzellagen aus TiC und TiN von zwei Einzellagen aus B₄C eingeschlossen. Bei den beiden Ausführungsformen (a) und (c) besteht sowohl die erste als auch die abschließende Einzellage aus TiN bzw. TiC. Bei beiden Ausführungsformen (b) und (d) besteht die erste Einzellage aus TiN bzw. TiC und die abschließende Lage aus B₄C. Die Gesamtzahl der Lagen bei den dargestellten Ausführungsformen beträgt 150. Die Dicke der metallischen Hartstofflagen liegt generell zwischen 30 und 50 nm, während die Lagen aus B₄C in allen vier Ausführungsformen 1 bis 3 nm dick sind. Die Gesamtdicke der vier Ausführungsformen beträgt zwischen 2 und 5 µm.

Die folgenden Untersuchungsergebnisse beziehen sich auf die in Fig. 1 (a) schematisch dargestellte Verschleißschutzschicht aus TiN/TiC/B₄C sowie auf Verschleißschutzschichten, die aus der periodischen Abfolge eines Verbunds aus TiN/TiC/BN, TiN/TiC/AlN, TiN/TiC/SiC oder TiN/TiC/Ti(B,C) mit ca. 2 nm dicken kovalenten Einzellagen und einer Gesamtdicke von ca. 5 µm bestehen. Die Verschleißschutzschichten sind jeweils auf einem Substrat aus Hartmetall aufgebracht.

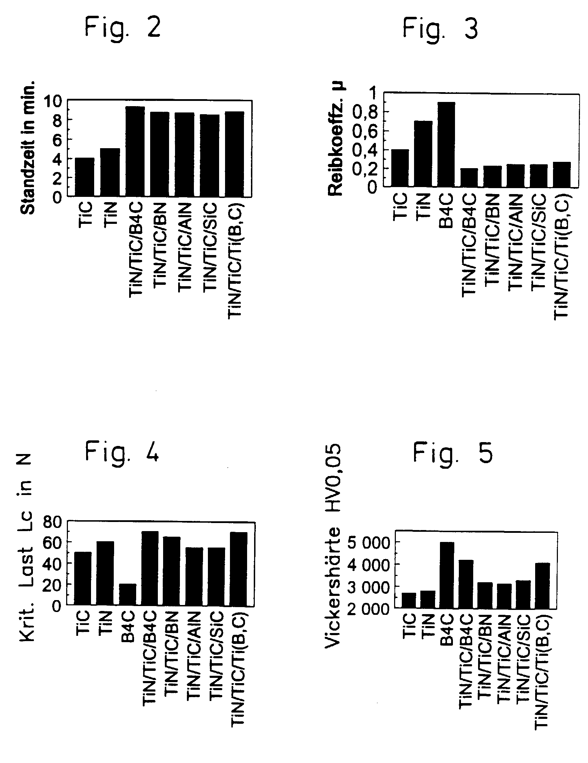

**Fig. 2** zeigt einen Vergleich der Standzeiten in [min] verschiedener Hartstoffschichten bei einem kontinuierlichen Drehtest. Die Schnittgeschwindigkeit betrug 250 m/min, der Vorschub 0,32 mm/Umdrehung und die Schnittiefe 2mm. Der Drehtest wurde bis zum Versagen der Platte durchgeführt. Es zeigt sich, daß mit der Verschleißschutzschicht TiN/TiC/B₄C nahezu die doppelte Standzeit erzielt wird wie mit Verschleißschutzschichten, die aus einer 5 µm dicken Einzellage aus TiC oder TiN auf einem Substrat aus Hartmetall bestehen. Die übrigen Verschleißschutzschichten weisen eine ähnliche Standzeit auf.

In **Fig. 3** sind die Reibkoeffizienten [µ] verschiedener Hartstoffschichten dargestellt. Der Gegenkörper bestand aus einer Kugel aus 100Cr6. Der Reibkoeffizient der Verschleißschutzschicht TiN/TiC/B₄C beträgt nur einen Bruchteil der Reibkoeffizienten von einlagigen, 5 µm dicken TiN- bzw. TiC-Schichten. Obwohl die oberste Lage der Verschleißschutzschicht TiN/TiC/B₄C aus TiC besteht, ist ihr Reibkoeffizient wesentlich geringer als der einer 5 µm dicken TiC-Schicht. Geringfügig höhere Reibkoeffizienten ergeben sich mit den übrigen Verschleißschutzschichten.

**Fig. 4** zeigt die Haftung von Hartstoffschichten auf einem Substrat aus Hartmetall K10-20 (Scratch-Test, kritische Last L_{c} in [N]). Die Haftung der Verschleißschutzschichten TiN/TiC/B₄C, TiN/TiC/BN und TiN/TiC/Ti(B,C) ist deutlich besser als die Haftung einer reinen TiN-Schicht, obwohl bei den Verschleißschutzschichten die erste Einzellage aus TiN besteht. Die Haftung der übrigen Verschleißschutzschichten ist gegenüber der Haftung einer reinen TiN-Schicht etwas vermindert.

In **Fig. 5** ist ein Vergleich der Mikrohärte HV0,05 (Vickershärte) verschiedener Hartstoffschichten dargestellt. Die Härte der Verschleißschutzschichten TiN/TiC/B₄C und TiN/TiC/Ti(B,C) nähert sich der Härte von B₄C-Schichten an und übersteigt die Härte von TiN- bzw. TiC-Schichten beträchtlich.

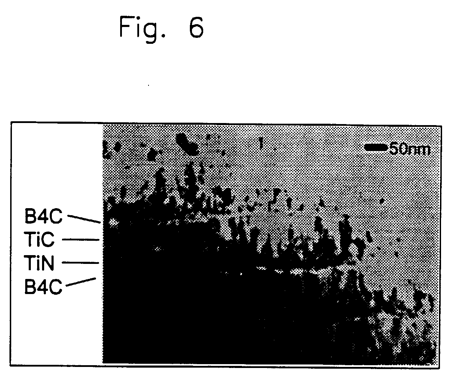

**Fig. 6** zeigt eine TEM-Aufnahme der Verschleißschutzschicht TiN/TiC/B₄C. Es ist deutlich zu erkennen, daß die Epitaxie der TiN/TiC-Einzellagen durch die B₄C-Einzellagen unterbrochen wird.

## Patentansprüche

1. Verschleißschutzschicht auf einem Substrat bestehend aus einer Vielzahl von Einzellagen mit einer ersten Einzellage aus einem metallischen Hartstoff, die unmittelbar auf einem Substrat aufgebracht ist, und auf der ersten Einzellage aufgetragenen weiteren Einzellagen, die in periodisch wiederholter Abfolge aus einem metallischen Hartstoff und einem anderen Hartstoff bestehen,
dadurch gekennzeichnet, daß
- der andere Hartstoff ein kovalenter Hartstoff ist und
- die Einzellagen eine periodisch wiederholte Abfolge eines Verbundes aus drei Einzellagen darstellen, wobei der Verbund aus zwei Einzellagen zweier verschiedener metallischer Hartstoffe und einer Einzellage aus dem kovalenten Hartstoff besteht.

2. Verschleißschutzschicht auf einem Substrat nach Anspruch 1,
dadurch gekennzeichnet, daß
der Verbund aus zwei Einzellagen bestehend aus Titannitrid und Titancarbid und einer Einzellage aus dem kovalenten Hartstoff Borcarbid zusammengesetzt ist.

3. Verschleißschutzschichicht auf einem Substrat nach einem der Ansprüche 1 bis 4,
dadurch gekennzeichnet, daß
die Anzahl Einzellagen zwischen 10 und 1000 beträgt.

4. Verschleißschutzschicht auf einem Substrat nach einem der Ansprüche 1 bis 3,
dadurch gekennzeichnet, daß
die Dicke der Einzellagen aus den kovalenten Hartstoffen höchstens die Hälfte der Dicke der Einzellagen aus den metallischen Hartstoffen beträgt.

5. Verschleißschutzschicht auf einem Substrat nach einem der Ansprüche 1 bis 4,
dadurch gekennzeichnet, daß
die Dicke der Einzellagen aus dem kovalenten Hartstoff zwischen 1 und 30 nm beträgt.

6. Verschleißschutzschicht auf einem Substrat nach einem der Ansprüche 1 bis 5,
dadurch gekennzeichnet, daß
die Gesamtdicke zwischen 1 und 10 µm beträgt.

## Claims

1. Wear-resistant layer on a substrate, comprising a plurality of individual plies having a first individual ply formed from a metallic hard substance, which ply is applied directly to a substrate, and additional individual plies, which are applied to the first individual ply and are formed, in a periodically repeated sequence, from a metallic hard substance and another hard substance,
characterised in that
- the other hard substance is a covalent hard substance, and
- the individual plies represent a periodically repeated sequence of a compound formed from three individual plies, the compound comprising two individual plies of two different metallic hard substances and one individual ply formed from the covalent hard substance.

2. Wear-resistant layer on a substrate according to claim 1, characterised in that the compound is composed of two individual plies formed from titanium nitride and titanium carbide and one individual ply formed from the covalent hard substance boron carbide.

3. Wear-resistant layer on a substrate according to one of claims 1 to 2, characterised in that the number of individual plies is between 10 and 1000.

4. Wear-resistant layer on a substrate according to one of claims 1 to 3, characterised in that the maximum thickness of the individual plies, formed from the covalent hard substances, is half the thickness of the individual plies formed from the metallic hard substances.

5. Wear-resistant layer on a substrate according to one of claims 1 to 4, characterised in that the thickness of the individual plies, formed from the covalent hard substance, is between 1 and 30 nm.

6. Wear-resistant layer on a substrate according to one of claims 1 to 5, characterised in that the overall thickness is between 1 and 10 µm.

## Revendications

1. Couche de protection contre l'usure sur un substrat constituée d'un grand nombre de strates ou monocouches avec une première monocouche constituée d'une matière dure métallique qui est déposée immédiatement sur un substrat, et sur la première monocouche d'autres monocouches déposées, qui sont composées, selon une succession périodiquement répétée, d'une matière dure métallique et d'une autre matière dure,
caractérisée en ce que
- l'autre matière dure est une matière dure covalente et
- les monocouches représentent une succession périodiquement répétée d'un composite constitué de trois monocouches, le composite étant constitué de deux monocouches de deux matières dures différentes et d'une monocouche de matière dure covalente.

2. Couche de protection contre l'usure sur un substrat selon la revendication 1,
caractérisée en ce que
le composite est constitué de deux monocouches constituées de nitrure de titane et de carbure de titane et d'une monocouche faite de la matière dure covalente carbure de bore.

3. Couche de protection contre l'usure sur un substrat selon l'une des revendications 1 à 2,
caractérisée en ce que
le nombre de monocouches est compris entre 10 et 1000.

4. Couche de protection contre l'usure sur un substrat selon l'une des revendications 1 à 3,
caractérisée en ce que
l'épaisseur des monocouches en matières dures covalentes s'élève au plus à la moitié de l'épaisseur des monocouches constituées des matières dures métalliques.

5. Couche de protection contre l'usure sur un substrat selon l'une des revendications 1 à 4,
caractérisée en ce que
l'épaisseur des monocouches en matières dures covalentes est comprise entre 1 et 30 nm.

6. Couche de protection contre l'usure sur un substrat selon l'une des revendications 1 à 5,
caractérisée en ce que
l'épaisseur totale est comprise entre 1 et 10 µm.
